# EUROPEAN PATENT APPLICATION

(11) **EP 4 620 793 A1**
(43) Date of publication of application: **24.09.2025**
(21) Application number: 24164266.9
(22) Date of filing: 18.03.2024
(51) Int. Cl.: B62K 3/00, B62K 15/00, E05D 3/18

(54) **CONCEALED HINGE WITH LOCKING MEANS FOR FOLDABLE VEHICLE**

(71) Applicant: Trieri Design d.o.o., 10000 Zagreb (HR)
(72) Inventor: Jelaska, Luka, 10000 Zagreb (HR)
(74) Representative: Bihar, Zeljko

(57) **Abstract**

A concealed hinge (100) for a foldable vehicle, where the said hinge (100) comprising two insets (10, 20) with their wedges (11, 12) to be inserted in the vehicle's frame interior. The insets (10, 20) are connected via the set of levers (31, 32) which forms a five-pin hinge mechanism, where two pins are fixed in the said insets (10, 20), two pins are sliding pins within the wedges (11, 12), and one pin is a pivot pin which connects the levers in their central portion. The locking mechanism is designed to lock the insets (10, 20), via their respectable locking rings (13, 23), in the closed and opened position. In the preferred embodiment, the concealed hinge is used to enable the side folding of electric scooters and minimize their transportation volume.

## Description

### Technical Field

The present disclosure relates to a concealed hinge with the locking means suitable for connecting tubular products of any cross-section, surfaces, or their mutual combinations, in need of a reliable connection of two parts. The locking means is used to lock the hinge in its closed or fully opened position. The disclosure is very suitable for use in foldable vehicles, i.e., for enabling the side folding of electric scooters and minimizing their transportation volume.

### Technical problem

The main technical problem solved with the present disclosure relates to a concealed hinge, suitable for connecting tubular products, in use with foldable vehicles, especially for the side folding of electric scooters and minimizing their transportation volume.

Electric scooters are very popular vehicles, frequently used in urban areas for commuting over distances less than 10 kilometers. Almost all electric scooters, under a net weight of 25 kilograms, are foldable in their front end allowing one person to carry them into buildings, by holding them to their foldable part of the frame. Furthermore, scooters' folding capability dramatically reduces their selling package and enables efficient transport on standardized pallets such as Euro-pallet or EPAL-pallet. However, folding the front part of the scooter, above its front wheel, backward and locking it to the rear part, still retains approximately 1/3 of its initial height. Folding is performed, in most models, via a visible hinge and an extra locking mechanism, e.g. locking rings, that prevents undesirable folding during use.

The present disclosure offers a reliable side folding of the electrical scooter frame, with a concealed hinge that completely emerges into the frame structure, and which can be locked in an open and closed position. Consequently, in a folded state it retains approximately 1/5 of the unfolded height, a slightly higher height than the front wheel diameter which is a significant improvement that reduces package volume by approximately 40%.

Having in mind the nature of the hinge construction, it can be effectively used wherever the need for a concealed hinge exists, which can be folded within the range of 0°-180°, with the ability to lock the hinge in both extreme cases, where the locking means forms an integral part of the said hinge.

### Prior Art

Foldable scooters are well documented in the prior art. The most common technical solutions for hinge-folding scooters are, perhaps, those documented in references 1) - 3):
1) Chinese utility model CN209581726U for HINGE LIMITING MECHANISM OF SCOOTER AND SCOOTER, filed in the name of Shenzhen Ride Tech Electronics Co. Ltd., CN,
2) European patent EP3663176B1 for SCOOTER, filed in the name of Ninebot (Bejing) Tech. Co. Ltd., CN, and,
3) Chinese patent application CN111319707A for FOLDING MECHANISM AND FOLDING SCOOTER, filed in the name of Beijing Xiaomi Mobile Software Co. Ltd., CN.

On the other hand, folding bicycles, using a standard hinge, have been known for a long time. Some of the advanced technical solutions for side folding bicycles are given in references 4) and 5):
4) Chinese utility model CN202670018U for UPPER TUBE TENON-MORTISE FOLDER FOR BICYCLE FRAME, filed in the name of Zhejiang Beiou Composite Manufacture Co. Ltd., CN.
5) European patent EP3584148B1 for FOLDABLE MECHANISM, filed in the name of Dahon Tech. Ltd., CN.

Although the above-cited solutions are reliable, the references are silent regarding the hinge locking in the closed and in the opened position, which is possible to achieve with the proposed technical solution. Furthermore, the hinges are far from being entirely immersed into the frame, i.e., concealed as such.

Furthermore, concealed hinges are known in furniture use, as obvious from the references cited below:
6) European patent application EP2083141A2 for CONCEALED HINGE, filed in the name of Nova Ferr S.r.l., IT, and
7) European patent application EP4180599A1 for DOOR HINGE, filed in the name of Simonswerk GmbH, DE.

It seems that the concealed hinges, when used in the furniture industry, are usually formed without locking means and used to connect plains like doors and frames.

### Summary

A concealed hinge for a foldable vehicle is disclosed. The hinge comprises two insets. The first inset has on one side two oppositely formed wedges and two oppositely formed locking rings on the opposite side, where each wedge is equipped with the longitudinal guide, where the guides are parallel one to another. Similarly, the second inset has on one side two oppositely formed wedges and two oppositely formed locking rings on the opposite side, where each wedge is again equipped with the longitudinal guide, where the guides are parallel one to another.

The hinge mechanism comprises levers. At least one U-shaped first lever is, on one of its ends, pivotally fixed with the pin within the first inset, and on the opposite end is pivotally fixed to the sliding pin inserted between the guides within the second inset. Similarly, at least one U-shaped second lever is, on one of its ends, pivotally fixed via the pin within the second inset, and on the opposite end is pivotally fixed to the sliding pin inserted between the guides within the first inset. All first levers and second levers are mutually pivotally connected in their central part via the pivot pin, forming the five-pin hinge mechanism. This mechanism allows the first inset and the second inset to be inclined relatively from one to another for any angle between 0 and 180 degrees, keeping the said insets firmly connected one to another via the said levers.

The hinge mechanism is further equipped with a locking means, formed on the first inset, with the locking shaft. The locking shaft locks the hinge in its closed position by passing through all locking rings of booth insets. The locking shaft locks the hinge in its fully opened position by passing only through the locking rings formed on the first inset, where the said shaft blocks the levers' retraction and prevents closing the hinge.

In the preferred embodiment, the locking means further comprises the activation button and locking groove formed on the locking shaft. The spring is mounted on the locking shaft between the activation button and the nearest locking ring. The nearest locking ring is equipped with a locking pin designed to slide along the geometry of the locking groove and locks the hinge in the closed or opened position.

In the preferred embodiment, the levers are stacked within the hinge in a way that the first levers are surrounded by the second levers forming the alternating set of levers. In one of the variants, the mechanism consists of one first lever and two second levers.

In yet another embodiment, each sliding pin is further equipped with the coverlid with additional sliders designed to slide along the guides. The coverlids are designed to prevent dust or mud from entering through the hinge once the said hinge is fully opened.

The concealed hinge is useful for connecting parts selected from tubular products of any cross-section, surfaces, or their mutual combinations, with the ability to lock the said hinge in the closed or opened position. The hinge's insets are inserted and fixed into the parts that need to be connected. In addition, the said hinge is used in foldable vehicles, preferably with electric scooters or bicycles, allowing it to be mounted between the tubular base frame and the tubular foldable frame of the said vehicles in a way that insets are fully immersed, with their wedges, into the said frames.

### A brief description of the figures

Figure 1A shows the preferred embodiment, where the concealed hinge, in its closed position, is used to connect the electric scooter's tubular base frame and the electric scooter's tubular foldable frame.
Figure 1B shows the same electric scooter folded in the transportation or storage mode, where the concealed hinge is fully opened.
Figure 2A shows the concealed hinge in its closed and locked position.
Figure 2B shows the hinge in its closed and unlocked position. Figures 2C, 2D, 2E and 2F show the hinge opened for the angles 45°, 90°, 135° and 180°, i.e. fully opened, among the insets.
Figure 3 shows the inner hinge construction for the hinge opened for 135°, in partial cross-section made across the nearest guides plane, closed to the closer second lever.
Figure 4 shows the inner hinge construction for the hinge opened for 135°, in partial cross-section made in the plane of the first lever.
Figure 5 shows the inner hinge construction for the hinge opened for 135°, in partial cross-section in the plane of the furthest second lever.
Figure 6 depicts the five-pin mechanism when the hinge is in the closed position, with the insets and wedges removed, but with the locking mechanism in the locked position.
Figure 7 shows the five-pin mechanism when the hinge is opened by 135°, with the insets, wedges, and guides removed, but with both coverlids depicted.
Figure 8 shows the five-pin mechanism when the hinge is fully opened, with pin guides and side locking rings, and the locking mechanism which is unlocked.

### Detailed Description

The main object of the present disclosure is a concealed hinge, with a locking means, suitable for connecting tubular products of any cross-section, surfaces, or their mutual combinations, in need of a reliable connection of two parts.

The description relates to the preferred embodiment depicted via accompanied figures. The person skilled in the art will immediately recognize the possible generalizations of the disclosure and can effortlessly adapt them to their needs. The concealed hinge, as disclosed herein, is extremely useful for forming foldable electric scooters, without limitations on its use in other technical fields, e.g., connecting pipes and profiles of various kinds, toys, vehicles, and furniture; everywhere the need is for the concealed hinge which can be locked in its closed and opened position and which can blend into connecting parts.

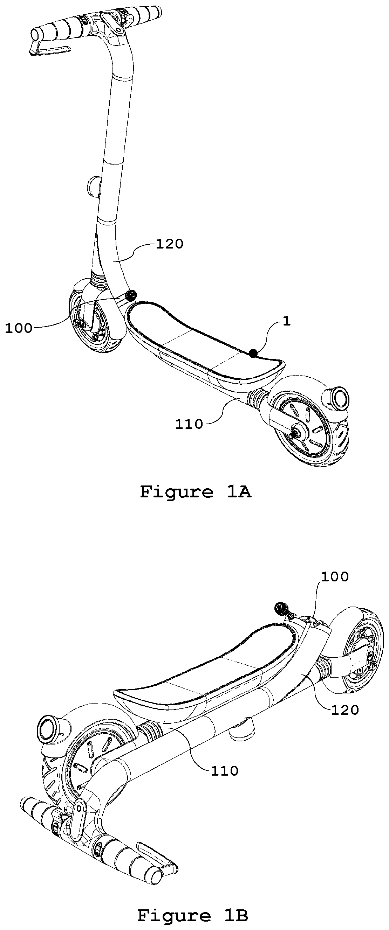

Figure 1A shows a typical electric scooter (1), with the base frame (110) and the foldable frame (120). The concealed hinge (100), according to the invention, is positioned between the said frames (110, 120) and blended entirely in them, except for the activation button (91). Figure 1B shows the same scooter (1) folded where the total folded height is slightly greater than the size of the front wheel, which is a significant reduction of approximately 40% in comparison with the industrial standard described in the prior art, reference 1).

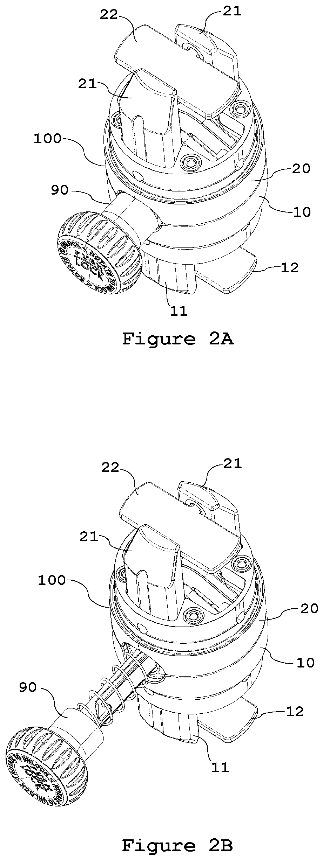

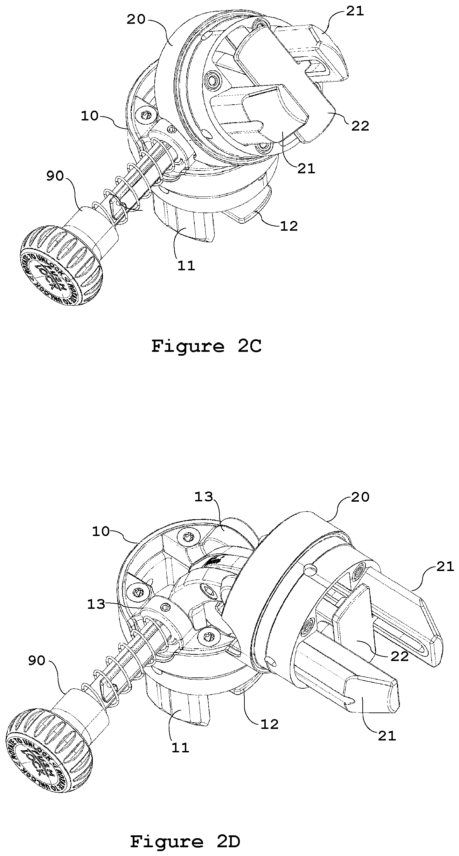

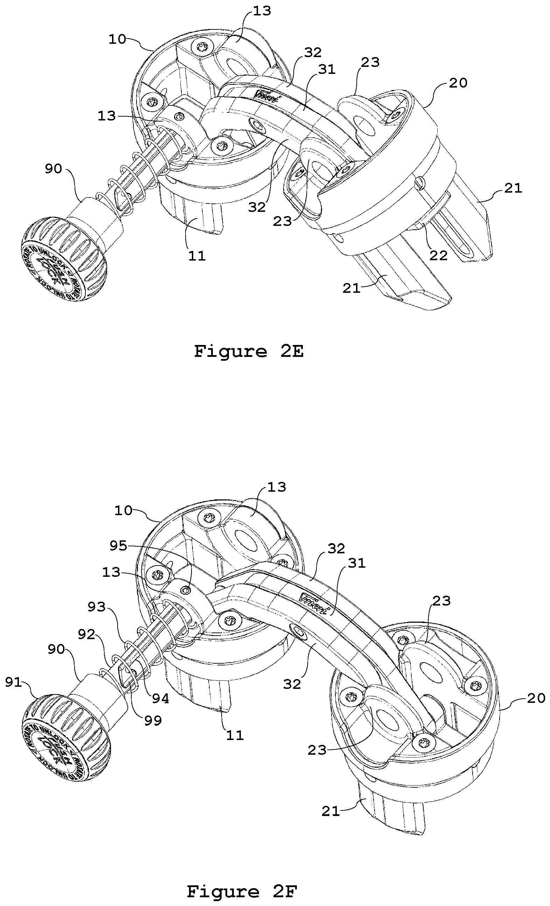

Figure 2A shows the concealed hinge (100) in its closed and locked position. Figure 2B shows the hinge in its closed and unlocked position. Figures 2C, 2D, 2E and 2F show the hinge opened for the angles 45°, 90°, 135°, and 180°, i.e. fully opened, among the insets (10, 20). Referring to those figures, the hinge (100) is formed of two insets (10, 20), preferably made from suitable metal alloys or hard composite materials. On one side, the first inset (10) has two oppositely formed wedges (11) which are designed to enter the frame and partially hide the working mechanism. On the opposite first inset (10) end, facing the second inset (20), two locking rings (13) are mounted. Similarly, on one side, the second inset (20) has two oppositely formed wedges (21) which are designed to enter the frame and partially hide the working mechanism. On the opposite second inset (20) end, facing the first inset (10), two locking rings (23) are mounted. The locking rings (23) are designed slimmer than the locking rings (13), where said rings (23) are dimensioned to be nested into the first inset (10) adjacent to the locking rings (13) and the operating levers (31, 32), as obvious from figures 2E, 2F. The role of the locking rings (13, 23) is to lock the hinge (100) in its fully closed and fully opened position, interacting with the locking means (90) which will be explained in detail in the rest of the description.

### The hinge's five-pin mechanism

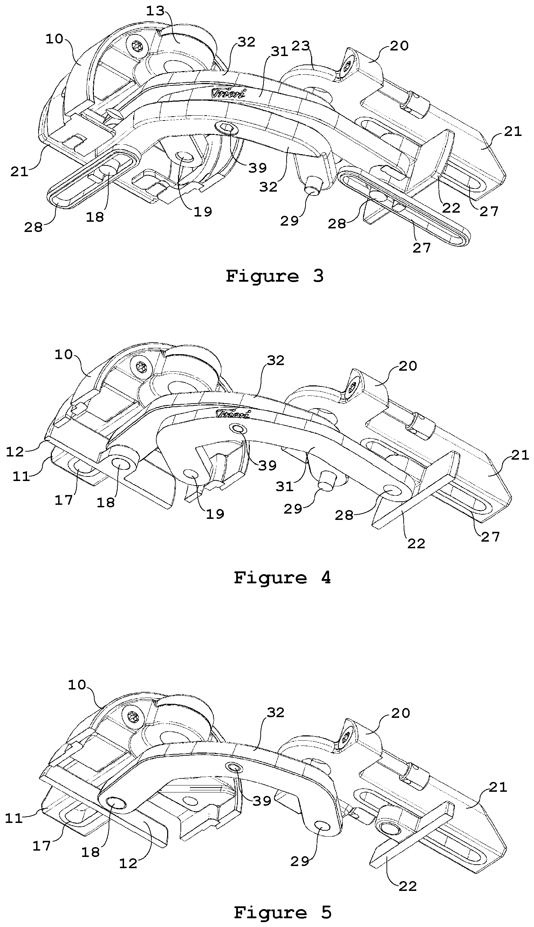

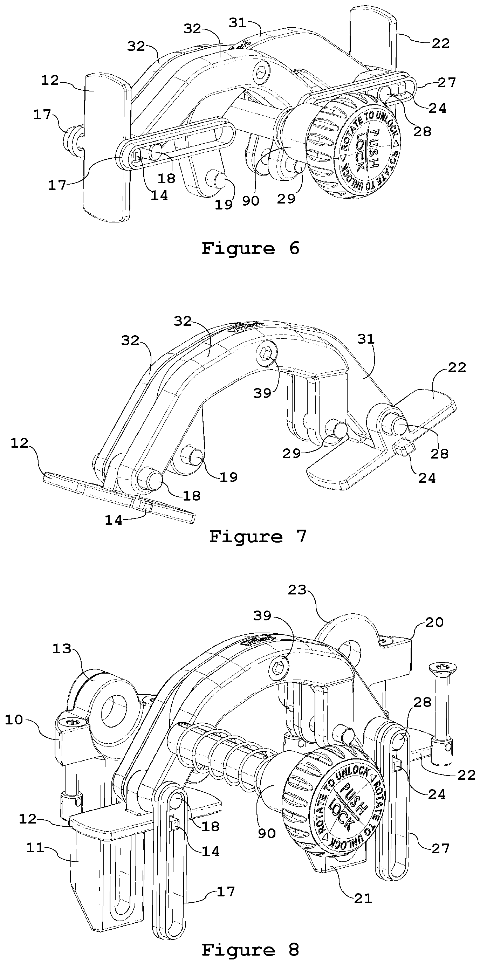

The hinge mechanism is far more complex and is shown in Figures 3-8. Each wedge (11, 21) is equipped with the appropriate guide (17, 27) for guiding sliding pins. The core of the hinge mechanism is presented in Figure 7, it consists of the first lever (31) and two second levers (32), according to the preferred embodiment, having the shape of the stylized inverted letter U. In theory, at least one first lever (31) and one second lever (32) are sufficient for normal operation. In practice, the best performance is achieved when levers (31, 32) are stacked within the hinge (100) in a way that the first levers (31) are surrounded by the second levers (32) forming the alternating set of levers, as described in reference 6). Such configuration distributes forces among the hinge (100) in an even manner.

Each U-shaped first lever (31) is pivotally fixed on one of its ends with the pin (19) fixed in the first inset (10). On the opposite end, the lever (31) is pivotally fixed to the sliding pin (28) which is inserted between the guides (27) within the second inset (20). Similarly, each U-shaped second lever (32) is pivotally fixed on one of its ends with the pin (29) fixed in the second inset (20). On the opposite end, the lever (32) is pivotally fixed to the sliding pin (18) which is inserted between the guides (17) within the first inset (10) .

All first levers (31) and second levers (32) are mutually pivotally connected in their central part via the pivot pin (39). Such a five-pin hinge mechanism, using pins (18, 28; 19, 29; 30) allows the first inset (10) and the second inset (20) to be inclined relatively from one to another for any angle between 0 and 180 degrees, keeping the insets (10, 20) firmly connected one to another via the levers (31, 32). It is worth noting that the levers (31, 32) geometry is carefully chosen to allow the mentioned task to be smoothly performed.

### The locking means

The five-pin mechanism *per se* is not sufficient to operationally serve the foldable scooters. The essential part is missing, i.e., the ability to lock the hinge (100) in its fully opened position and fully closed position, which is a must for the said vehicles.

In the preferred embodiment, the locking means (90) is formed simply and reliably, as depicted in Figure 2F. It comprises the locking shaft (92) with the activation button (91). The locking shaft (92) is equipped with the locking groove (94) carved on it. The locking groove (94) has, on the side closer to the activation button, a locking curvature formed as the hook (99). This locking grove (94) holds the locking shaft (92) nested within the hinge (100), i.e., attached to the nearest locking ring (13), which is equipped with the locking pin (95). The said locking pin (95) can be screwed in the nearest locking ring (13) to partially enters the locking groove (94), allowing the locking shaft (92) to move according to the locking groove (94) defined geometry, relative to the nearest locking ring (13). An extra spring (93) is mounted on the locking shaft (92) between the nearest locking ring (13) and the junction of the said shaft (92) with the activation button (91), for securing the position of the locking shaft (92) within the locking ring (13).

The fully opened unlocking position is depicted in Figures 2F and 8. If the activation button (91) is pressed towards the nearest locking ring (13), and rotated counterclockwise, the pin (95) will be captured by the hook (99) formed in the locking groove (94), and the locking shaft will pass through both locking rings (13) blocking the levers (31, 32) retraction and securing the hinge (100) in that position. If the activation button (91) is slightly pressed and rotated clockwise, the pin (95) will be released from the hook (99), and the spring (93) will release the locking shaft (92) from the more distant locking ring (13) and retract it in the position depicted in Figure 2F, that enable the relative folding of the insets (10, 20).

The same open-and-closing operation can be performed with the fully closed hinge (100), as depicted in Figures 2A, 2B, and 6. The only difference is that the locking shaft (91) passes through all four locking rings (13, 23), locking the hinge insets (10, 20) together via the said rings.

### Dust and mud protection

The hinge (100) in its fully opened and locked position, as depicted in Figure 1B, is opened to dust and mud, without proper protection.

In the preferred embodiment, a pair of coverlids (12, 22) are mounted to the five-pin hinge mechanism to prevent mud and dust particles from penetrating the frame, i.e., between the wedges (11, 21). Each sliding pin (18, 28) is therefore further equipped with its coverlid (12, 22). Each coverlid (12, 22) has additional sliders (14, 24) designed to slide along the guides (17, 27), as depicted in Figures 6-8. In the fully opened hinge position, the coverlids (12, 22) cover the five-pin hinge mechanism.

### Applicability

The industrial applicability of the disclosure is obvious. However, its use is not restricted to foldable vehicles only, such as folding scooters. It is also suitable for connecting tubular products of any cross-section, surfaces, or their mutual combinations, in need of a reliable connection of two parts that can be locked in opened and closed positions, and where, if necessary, the dust and/or mud protection is offered for the fully opened hinge exposed to various conditions. Preferably, all parts can be made of metal or metal alloys, or from composite materials as well, except the spring of the locking mechanism, which renders it usable in harsh environments, if necessary. The person skilled in the art will certainly find the obvious modification of the present disclosure to fulfill the need for a reliable concealed hinge with a locking ability.

### References

- 1: Scooter
- 10: First inset
- 11: Wedge
- 12: Coverlid
- 13: Locking ring
- 14: Slider
- 17: Guide for sliding pin 18 and slider 14
- 18: Second lever sliding pin
- 19: First lever pin
- 20: Second inset
- 21: Wedge
- 22: Coverlid
- 23: Locking ring
- 24: Slider
- 27: Guide for sliding pin 28 and slider 24
- 28: First lever sliding pin
- 29: Second lever pin
- 31: First Lever, fixed in the First inset 10
- 32: Second Lever, fixed in the Second inset 20
- 39: Pivot pin
- 90: Locking means
- 91: Activation button
- 92: Locking shaft
- 93: Spring
- 94: Locking groove
- 95: Locking pin
- 99: Hook
- 100: Concealed hinge
- 110: Base frame
- 120: Foldable frame

## Claims

1. A concealed hinge (100) for a foldable vehicle, where the said hinge (100) comprising:
- a first inset (10), having on one side two oppositely formed wedges (11) and two oppositely formed locking rings (13) on the opposite side, where each wedge (11) is equipped with the longitudinal guide (17), where the guides (17) are parallel one to another,
- a second inset (20), having on one side two oppositely formed wedges (21) and two oppositely formed locking rings (23) on the opposite side, where each wedge (21) is equipped with the longitudinal guide (27), where the guides (27) are parallel one to another,
- at least one U-shaped first lever (31) which is pivotally fixed on one of its ends with the pin (19) within the first inset (10), and on the opposite end is pivotally fixed to the sliding pin (28) inserted between the guides (27) within the second inset (20),
- at least one U-shaped second lever (32) which is pivotally fixed on one of its ends via the pin (29) within the second inset (20), and on the opposite end is pivotally fixed to the sliding pin (18) inserted between the guides (17) within the first inset (10),
- where all first levers (31) and second levers (32) are mutually pivotally connected in their central part via the pivot pin (39) forming the five-pin hinge mechanism that allows the first inset (10) and the second inset (20) to be inclined relatively from one to another for any angle between 0 and 180 degrees, keeping the insets (10, 20) firmly connected one to another via the levers (31, 32),
- wherein the said hinge mechanism is further equipped with a locking means (90), formed on the first inset (10), with the locking shaft (92) which locks the hinge (100) in its closed position by passing through all locking rings (13, 23) of booth insets (10, 20), or locks the hinge (100) in its fully opened position by passing only through the locking rings (13) formed on the first inset (10), where the said shaft (92) blocks the levers (31, 32) retraction and prevents closing the hinge (100) .

2. The concealed hinge (100) according to claim 1, wherein the locking means (90) further comprises the activation button (91) and locking groove (94) formed on the shaft (92), and the spring (93) which is mounted on the locking shaft (92) between the activation button (91) and the nearest locking ring (13), where the nearest locking ring (13) is equipped with a locking pin (95) designed to slide along the geometry of the locking groove (94) and locks the hinge in the closed or opened position.

3. The concealed hinge (100) according to any of the preceding claims, where the levers (31, 32) are stacked within the hinge in a way that the first levers (31) are surrounded by the second levers (32) forming the alternating set of levers.

4. The concealed hinge (100) according to claim 3, where the mechanism consists of one first lever (31) and two second levers (32) .

5. The concealed hinge (100) according to any of the previous claims, wherein each sliding pin (18, 28) is further equipped with the coverlid (12, 22) having additional sliders (14, 24) designed to slide along the guides (17, 27), where this coverlid (12, 22) is designed to prevent dust or mud from entering through the hinge once the said hinge is fully opened.

6. Use of concealed hinge (100), according to any of the previous claims, for connecting parts selected from tubular products (110, 120) of any cross-section, surfaces, or their mutual combinations, with the ability to lock the said hinge (100) in the closed or opened position, where the insets (10, 20) are inserted and fixed into the parts that need to be connected.

7. Use of concealed hinge (100) according to claim 6, in foldable vehicles (1), preferably electric scooters or bicycles, allowing it to be mounted between the tubular base frame (110) and the tubular foldable frame (120) of the said vehicles in a way that insets (10, 20) are fully immersed, with their wedges (11, 21), into the said frames (110, 120).
